# EUROPEAN PATENT APPLICATION

(11) **EP 4 790 551 A1**
(43) Date of publication of application: **12.08.2026**
(21) Application number: 25156285.6
(22) Date of filing: 06.02.2025
(51) Int. Cl.: G06F 8/71, G06F 8/34, G06N 3/0475, G06F 8/35, G05B 19/042, G06N 20/00, G06N 3/08, G06N 3/045

(54) **METHOD AND SYSTEM FOR GENERATIVE AI-BASED GRAPHICAL COMPARISON OF ENGINEERING OBJECTS**

(71) Applicant: Siemens Aktiengesellschaft, 80333 München (DE)
(72) Inventor: Puranik, Krishna, 560085 Bengaluru, Karnataka (IN)
(74) Representative: Isarpatent

(57) **Abstract**

A method and system for Al-assisted graphical comparison of engineering objects (108A-N) includes identifying an engineering object type and prompting an AI model (510) to generate textual descriptive models (504A and 504B) for different versions (502A and 502B) of an engineering object (108A). The method compares the textual descriptive models (504A and 504B) to generate a textual difference model 506B. The AI model then generates graphical representations (506A and 506C) of the first and the second versions (502A and 502B) and a graphical compare representation (508) visualizing differences between versions. The graphical compare representation (508) is displayed on a user interface (122A).

## Description

### FIELD OF INVENTION

The present disclosure relates to comparing engineering objects, and more particularly to a method and system for generating graphical comparisons of engineering objects using artificial intelligence.

### BACKGROUND

Industrial automation systems are widely used to control and monitor complex manufacturing processes, production lines, and other industrial operations. These systems typically consist of various components such as programmable logic controllers (PLCs), human-machine interfaces (HMIs), sensors, actuators, and other devices that work together to automate and optimize industrial processes. Engineering objects, such as PLC programs, HMI screens, and configuration files, are elements of these systems that define their behavior and functionality.

Version control systems like Git or Subversion (SVN) are commonly used in industrial automation to manage and track changes to engineering objects over time. These systems allow multiple engineers to collaborate on projects, maintain a history of modifications, and revert to previous versions if needed. However, comparing different versions of engineering objects can be challenging, especially for complex automation programs or graphical elements like HMI screens.

Existing comparison tools for engineering objects often rely on textual comparisons, which is not be intuitive or meaningful for certain types of objects. For example, comparing two versions of a ladder logic program or an HMI screen layout using a text-based diff tool can be difficult to interpret and does not effectively highlight the functional changes between versions. This can lead to errors in understanding the impact of modifications and potentially introduce issues when integrating changes into the production environment.

Additionally, developing standalone graphical comparison tools for each type of engineering object and programming language used in industrial automation can be time-consuming and costly. Such tools would need to understand the specific structure and semantics of various object types, programming languages, and file formats used across different automation platforms.

Current solutions for managing and comparing engineering objects in industrial automation systems face several limitations. While some approaches support custom data management and metadata within project files, they often lack robust graphical comparison capabilities. This limitation hinders engineers' ability to intuitively understand and analyze changes between different versions of engineering objects, such as PLC programs or HMI screens. Synchronization and data management across various components of an automation system can be complex and prone to inconsistencies. Existing methods may require manual intervention to ensure data integrity, which can be time-consuming and error-prone. Furthermore, while some solutions offer granular management and bulk instantiation of engineering objects, these processes can be tedious and inefficient, especially when dealing with large-scale automation projects.

For example, checksum-based approaches for ensuring consistency between versions may be limited in their ability to capture the full context of changes. They may focus primarily on textual and structural modifications, potentially missing important functional or semantic differences that are critical in industrial automation contexts.

Some existing systems employ unit-based structuring and delta updates to optimize data transfer and version management. However, these methods may still lead to inconsistencies if dependencies between different components are not properly managed. This can result in integration issues and unexpected behavior when deploying changes to production environments.

Moreover, current solutions may lack effective feedback mechanisms for continuous improvement of the comparison and management processes. Without a systematic way to incorporate user input and learn from past comparisons, these systems may struggle to adapt to the evolving needs of industrial automation projects and fail to address recurring issues efficiently.

It has been appreciated that a generative Al-based graphical comparison system is needed that overcomes one or more of these problems.

### SUMMARY

The object of the invention is achieved by a method for Al-assisted graphical comparison of engineering objects. An engineering object refers to a distinct component or module within an automation system, which is utilized to achieve specific functions or tasks. Examples of engineering objects include Blocks, which are used to implement specific control logic, Tag tables that store and manage variables, HMI (Human-Machine Interface) screens that provide visual interaction interfaces for operators, and UDTs (User-Defined Types) that define custom data structures. An engineering object type categorizes the engineering object based on a function and a characteristic of the engineering object. For instance, a block is categorized as a first engineering object type that includes various programming languages such as Ladder Logic (LAD), Function Block Diagram (FBD), or Structured Text (ST). An HMI screen represents a second engineering object type that involves graphical layouts and user interaction elements. Tag tables and UDTs represent additional engineering object types, each with unique attributes and structures.

The method comprises detecting, by a processor, a modification of an engineering object by a user. During the modification, a first version of the engineering object is modified into a second version of the engineering object. In one example, the first version and the second version of the engineering object are received from a version control system. The method further comprises identifying, by the processor, an engineering object type of the engineering object. The method further comprises identifying one or more features and attributes of the engineering object based on the detected engineering object type. The method further comprises extracting a plurality of data items from the first version and the second version of the engineering object. The method further comprises generating natural language descriptions of the extracted plurality of data items for the first and the second version of the engineering object. The method further comprises encapsulating the generated natural language descriptions into at least a first prompt that captures a plurality of relationships between a plurality of components and attributes of the engineering object. The method further comprises transmitting at least the first prompt to the AI model to prompt the AI model.

The method further comprises prompting, by the processor, an artificial intelligence (Al) model to generate a first and a second textual descriptive model based on the first version and the second version of the engineering object respectively. The method further comprises comparing, by the processor, the first and the second textual descriptive models to generate a textual difference model that comprises a plurality of textual differences between the first and the second textual descriptive models. The method further comprises prompting, by the processor, the AI model to generate a first graphical representation and a second graphical representation of the engineering object. The first and the second graphical representations are generated by the AI model using the first and the second textual descriptive models respectively. The first and second textual descriptive models comprise textual descriptions of structured representations of respective versions of the engineering object. The textual description comprises information about object properties, hierarchical relationships, and functional characteristics of the engineering object.

The first and second graphical representations comprise visual depictions of at least one of a structure, layout, or functionality of a respective version of the engineering object. The method further comprises prompting the AI model to generate the first graphical representation and the second graphical representation of the engineering object. The method further comprises identifying visual elements associated with the engineering object type. The method further comprises extracting, by the processor, a plurality of layout information and component relationships from the first and second textual descriptive models. The method further comprises generating, by the processor, visual element placement instructions based on the extracted layout information and component relationships. The method further comprises transmitting the visual element placement instructions and engineering object type to prompt the AI model. The method further comprises receiving the first and second graphical representations from the AI model. The graphical representations visually depict the structure and relationships of components within the respective versions of the engineering object.

The method further comprises prompting, by the processor, the AI model to generate a graphical compare representation which visualizes a plurality of differences between the first version and the second version of the engineering object. The graphical compare representation is generated in real-time with the modification of the engineering object. The method further comprises transmitting the first graphical representation, the second graphical representation, and the textual difference model to the AI model. The method further comprises prompting the AI model to visually highlight differences between the first and second graphical representations based on the textual difference model. The method further comprises specifying one or more visual indicators to represent a plurality of types of differences between the first version and the second version of the engineering object. The method further comprises prompting the AI model to generate explanatory annotations for each type in the plurality of types of differences. The method further comprises receiving the graphical compare representation from the AI model. The graphical compare representation visualizes the plurality of differences between the first version and the second version of the engineering object. The method further comprises displaying, by the processor, the generated graphical compare representation on a user interface to visually represent the modification to the user in real-time, without introducing perceptible latency after the modifications are made.

The method further comprises analyzing, by the processor, the first and second textual descriptive models and the graphical compare representation to detect one or more errors in the engineering object. The method further comprises generating, by the processor, one or more suggestions for correcting the detected one or more errors. The method further comprises displaying, by the processor, the suggestions to the user through the user interface. The method further comprises updating the graphical compare representation based on user-selected corrections from the suggestions.

The method further comprises generating a change summary report based on the graphical compare representation. The change summary report includes a list of differences between the first version and the second version of the engineering object. The method further comprises providing access to a user, to the change summary report via the user interface.

The method further comprises enabling user interaction with the graphical compare representation through the user interface. The method further comprises receiving user selection of a specific difference highlighted in the graphical compare representation. The method further comprises retrieving detailed information about the selected difference from the textual difference model. The method further comprises displaying the detailed information in a pop-up window or side panel within the user interface.

The method further comprises generating a version history timeline based on multiple versions of the engineering object. The method further comprises integrating the version history timeline with the graphical compare representation. The method further comprises enabling a user to navigate between different versions of the engineering object through interaction with the version history timeline in the user interface.

The object of the present invention is also achieved by an engineering system for Al-assisted graphical comparison of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

### BRIEF DESCRIPTION OF FIGURES

Embodiments of the invention will be described, by way of example, with reference to the following drawings, in which:
FIG. 1 is a system diagram illustrating an exemplary system for a generative Al-based graphical comparison of engineering objects, according to some aspects of the present disclosure.
FIG. 2 is a diagram depicting components of an engineering system is used in conjunction with the generative Al-based graphical comparison system, in accordance with some aspects of the present disclosure.
FIG. 3 is a block diagram of an automation module, such as those shown in FIG 2, in which an embodiment of the present invention can be implemented; and
FIG. 4 is a process flowchart illustrating an exemplary method of a generative Al-based graphical comparison of engineering objects, according to an embodiment of the present invention.
FIG. 5 is an explanatory diagram illustrating a working of a method of the generative Al-based graphical comparison system for engineering objects, according to an embodiment of the present invention.

Various embodiments are described with reference to the drawings, wherein like reference numerals are used to re-fer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without specific details.

### DETAILED DESCRIPTION

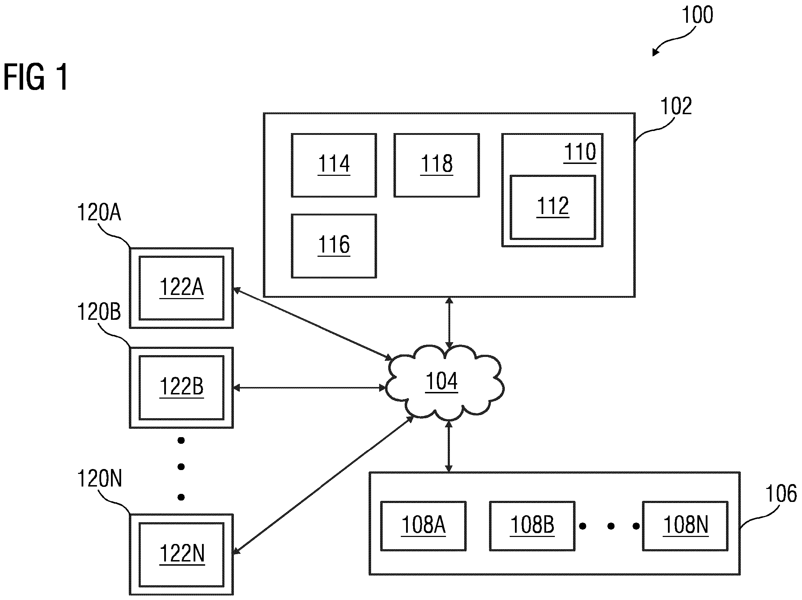

FIG. 1 is a system diagram illustrating an exemplary system 102 for a generative Al-based graphical comparison of engineering objects, according to some aspects of the present disclosure. In FIG 1, the industrial environment 100 includes the engineering system 102, an engineering project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a industrial plant via the network 104 (such as Local Area Network (LAN), Wide Area Network (WAN), Wi-Fi, Internet, any short range or wide range communication). The engineering system 102 is also connected to the one or more client devices 120A-N via the network 104.

The engineering project 106 comprises a plurality of engineering objects 108A-N. Each engineering object of the plurality of engineering objects refers to a distinct component or module within an automation system, which is utilized to achieve specific functions or tasks. Examples of engineering objects include Blocks, which are used to implement specific control logic, Tag tables that store and manage variables, HMI (Human-Machine Interface) screens that provide visual interaction interfaces for operators, and UDTs (User-Defined Types) that define custom data structures. An engineering object type categorizes the engineering object based on a function and a characteristic of the engineering object. For instance, a block is categorized as an engineering object type that includes various programming languages such as Ladder Logic (LAD), Function Block Diagram (FBD), or Structured Text (ST). An HMI screen represents another engineering object type that involves graphical layouts and user interaction elements. Tag tables and UDTs represent additional engineering object types, each with unique attributes and structures.

The engineering system 102 is configured to access the engineering project 106 using the network 104. FIG 1 illustrates the engineering system 102 enabled to access the engineering project 106, one skilled in the art can envision that the engineering system 102 can access multiple engineering projects stored in multiple storage locations which are accessible via the network 104.

The one or more client devices 120A-N may be a desktop computer, laptop computer, tablet, smart phone and the like. Each of the one or more client devices 120A-N is provided with a plurality of user interfaces 122A-N for generating and/or editing the plurality of engineering objects 108A-N. For example, the one or more client devices 120A-N can access the engineering system 102 for automatically generating the plurality of engineering objects 108AN. Thus, a user is enabled to modify each of the plurality of engineering objects 108A-N to generate multiple versions of the plurality of engineering objects 108A-N. The one or more client devices 120A-N can access cloud applications (such as providing performance visualization of the plurality of engineering objects 108A-N via a web browser). Throughout the specification, the terms "client device" and "user device" are used interchangeably.

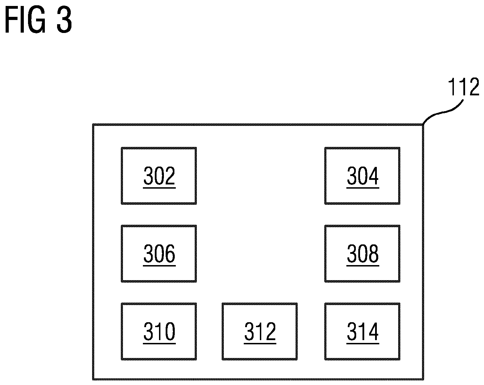

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing the engineering project 106 comprising the plurality of engineering objects 108A-N. The engineering system 102 comprises a platform 110 (such as a cloud computing platform), an automation module 112, a server 114 including hardware resources and an operating system (OS), a network interface 116 and a database 118. The network interface 116 enables communication between the engineering system 102, and the one or more client device(s) 120A-N. The interface (such as cloud interface)(not shown in FIG 1) allow the engineers at the one or more client device(s) 120A-N to access the one or more engineering objects of the engineering project 106 and perform one or more actions on the one or more engineering objects as same instance. The server 114 includes one or more servers on which the OS is installed. The servers 114 comprises one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. In one example, the platform 110 comprises a combination of dedicated hardware and software built on top of the hardware and the OS. Details of the automation module 112 is explained in FIG. 3.

The database 118 stores the information relating to the engineering project 106 and the one or more client device(s) 120A-N. The database 118 is, for example, a structured query language (SQL) data store or a not only SQL (NoSQL) data store. In an exemplary embodiment, the database 118 is configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the plurality of engineering objects 108A-N, test results, simulation results, status messages, one or more simulation instances, graphical programs, program logics, program logic patterns, product manuals of the plurality of engineering objects 108A-N and engineering object properties, one or more engineering object blocks, relationship information between the engineering objects, requirements, program update messages and the like.

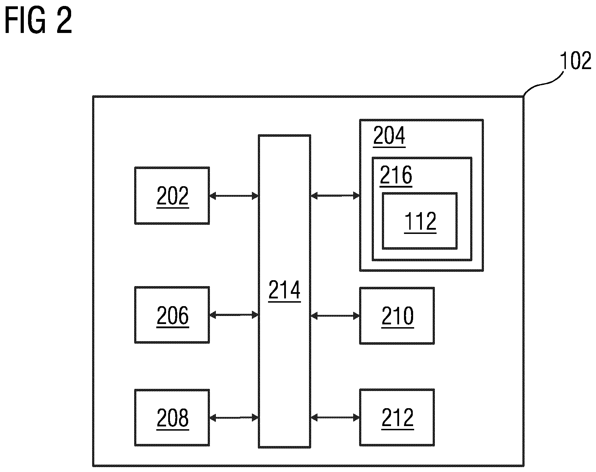

FIG. 2 is a diagram depicting components of an engineering system 102 that may be used in conjunction with the generative Al-based graphical comparison system, in accordance with some aspects of the present disclosure. In FIG 2, the engineering system 102 includes a processor 202, an accessible memory 204, a storage unit 206, a communication interface 208, an input-output unit 210, a network interface 212 and a bus 214.

The processor 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processor, digital signal processor, or any other type of processing circuit. The processor 202 also includes embedded controllers, such as generic or programmable logic devices or arrays, application specific integrated circuits, single-chip computers, and the like. The processor 202, as described, can also function as a cloud processor, facilitating scalable and distributed computing tasks across various cloud platforms. In a cloud environment, processor 202 is configured to leverage virtualized computing resources to dynamically manage workloads, enhancing performance and efficiency. Additionally, other architectures such as ARM and PowerPC may be utilized within the cloud to optimize energy consumption and execution speed depending on the application's requirements. The flexibility of processor 202 allows it to integrate seamlessly with heterogeneous architectures, providing robust solutions for cloud-based services and applications

The memory 204 is at least a non-transitory volatile memory and non-volatile memory. The memory 204 may be coupled for communication with the processor 202, such as being a computer-readable storage medium. The processor 202 is configured to execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

The automation module 112 is configured to perform generative AI based graphical comparison of one or more engineering objects in the engineering project 106. The engineering project 106 comprises configuration information associated with the plurality of engineering objects 108A-N in the industrial plant 106. The automation module 112 is a sophisticated software component designed to streamline an entire process of comparing multiple version of the plurality of engineering objects 108A-N.

The engineering project 106, in this context, refers to a technical document which comprises comprehensive planning, design, and configuration of various components and systems required for a construction, operation, and maintenance of an industrial facility. The engineering project 106 includes the detailed specifications and layouts for machinery, electrical systems, control systems, piping, instrumentation, and other essential infrastructure. For example, the engineering project 106 for a chemical plant might involve the design of reactors, distillation columns, heat exchangers, pumps, and control systems to ensure the efficient and safe production of chemicals. The engineering project 106 further comprises the plurality of engineering objects 108A-N.

When executed by the processing unit 202, the automation module 112 causes the processor 202 to detect a modification of the engineering object 108A by a user. During the modification, a first version of the engineering object is modified into a second version of the engineering object 108A. For example, consider an HMI screen used in an industrial automation system. The user accesses the engineering object 108A through a user interface 122A on a client device 120A, such as a desktop computer or a tablet, which communicates with the engineering system 102 via a network 104. The user interface 122A displays the first version of the HMI screen, which includes various visual elements like buttons, indicators, and text fields.

The user decides to enhance the HMI screen by adding a new button and changing the color of an existing indicator. As the user makes changes through the user interface 122A, the processor 202 detects each modification in real-time. The processor 202 identifies the addition of the new button and the color change of the indicator as modifications to the first version of the HMI screen. The processor 202 then records the updated layout and attributes, creating the second version of the HMI screen. The automation module 112 within the engineering system 102 ensures that every change made by the user is accurately captured and processed. The automation module 112 employs natural language processing algorithms and machine learning techniques to interpret the modifications.

In one example, the first version and the second version of the engineering object (108A) are received from a version control system. The version control system is a software tool that helps manage changes to source code or documents over time. Engineers and developers use a version control system to track modifications, maintain a history of changes, and facilitate collaboration among multiple users. The version control system records every change made to the engineering objects, allowing users to access previous versions, compare different versions, and merge updates from various contributors.

The engineering system 102 receives the first version and the second version of the engineering object 108A by accessing the version control system's repository. The repository stores all versions of the plurality of engineering objects 1 08A-N in a structured manner. When a user initiates a comparison or modification task, the engineering system 102 queries the version control system to retrieve the specific versions of the engineering object 108A required for the task. The version control system responds to the query by providing the requested versions, ensuring that the engineering system has access to the accurate and complete history of modifications.

The automation module 112 further causes the processor 202 to identify the engineering object type of an engineering object 108A. For example, when the processor 202 encounters a block, it is configured to recognize the block as an engineering object type that is programmed in LAD or FBD. The processor 202 is further configured to identify a layout and a structure of the block, including one or more networks, rungs, and instructions associated with the block. Each engineering object 108A-N is represented in a specific format depending on its type. A block programmed in LAD is represented by a series of interconnected rungs and instructions, visually resembling a ladder. An HMI screen is represented by a graphical layout, depicting various UI elements and their configurations. A Tag table is represented by a tabular format listing variables and their attributes. A UDT is represented by a structured format, outlining fields and corresponding data types. The automation module 112 is further configured to cause the processor 202 to identify an engineering object type and understand a representation format of the engineering object type to facilitate accurate parsing and comparison.

The automation module 112 is further configured to cause the processor 202 to identify a plurality of features and a plurality of attributes of the engineering object 108A based on the engineering object type. The processor 202 is configured to identify a block, for example, as an engineering object type that includes one or more features such as rungs, instructions, and networks. One or more attributes of a block include a specific set of logic operations, a sequence of execution, and interconnections between different rungs. When the processor 202 encounters a block programmed in Ladder Logic (LAD), the processor 202 is further configured to recognize a graphical layout that resembles a ladder, with horizontal rungs representing different logical operations and vertical rails indicating a flow of execution. The processor 202 is further configured to identify specific instructions within each rung, such as contacts, coils, timers, and counters, and respective configurations.

For HMI screen, the processor 202 is configured to identify one or more features such as buttons, indicators, text fields, and spatial arrangement of the one or more features. One or more attributes of an HMI screen include properties like size, position, color, and behavior upon user interaction.

In one example, when the processor 202 processes the HMI screen, the processor 202 is configured to recognize a graphical layout and the arrangement of various UI elements. The processor 202 is configured to identify interactive elements such as buttons, which can trigger specific actions, and indicators that provide visual feedback to an operator. The processor 202 is configured to also identify text fields where operators can input data or receive information.

In another example, when dealing with Tag tables, the processor 202 is configured to identify one or more features such as a list of variables, data types, and associated properties. The one or more attributes of Tag tables include variable names, data types (e.g., integer, float, string), initial values, and any specific tags or labels associated with each variable. The processor 202 is configured to recognize a tabular format of Tag tables and identify each row as representing a distinct variable. The processor 202 is configured to further identify columns as representing various attributes of the variables, such as their data types, initial values, and descriptions.

In another example, for UDTs (User-Defined Types), the processor 202 is configured to identify one or more features such as the custom data structures and their fields. One or more attributes of UDTs include names of fields, data types, and any specific initial values or constraints associated with the UDT. The processor 202 processes UDTs by recognizing a structured format that outlines fields and corresponding data types. The processor 202 is configured to identify each field within the UDT and associate the UDT with specific attributes, ensuring a comprehensive understanding of the custom data structure.

The automation module 112 is further configured to cause the processor 202 to extract a plurality of data items from a first version and a second version of the engineering object 108A. The first version represents the initial state or an earlier iteration of the engineering object 108A, while the second version represents a subsequent state or a later iteration of the same engineering object 108A. For example, consider a block programmed in Ladder Logic (LAD). The first version of the block comprises an initial set of rungs and instructions designed to perform a specific control task. The rungs might include basic operations such as turning on a motor when a switch is activated. The processor 202 is configured to extract data items such as specific instructions, sequence of operations, and interconnections between the rungs in this first version. The second version of the block could include modifications to improve functionality or address errors. The modification made by the user comprises adding new rungs, altering existing instructions, or changing the sequence of operations. The processor 202 is configured to extract the updated data items from the second version, including any new instructions, modified logic, and changes in the interconnections.

In the case of an HMI screen, the first version includes a basic layout with essential buttons, indicators, and text fields. The processor 202 is further configured to extract one or more data items such as positions, sizes, colors, and behaviors of UI elements. The second version comprises enhancements such as additional buttons, changes in the layout, or updated visual styles. The processor 202 is further configured to extract new and modified data items from the second version, capturing updated properties and configurations of UI elements.

The automation module 112 is further configured to cause the processor 202 to generate natural language descriptions of the extracted plurality of data items for the first and the second version. The processor 202 is further configured to utilize an artificial intelligence (Al) model to convert technical details and attributes of the engineering object 108A into coherent and understandable natural language descriptions. The artificial intelligence model is a sophisticated generative AI system designed to interpret, analyze, and generate natural language descriptions and graphical representations of the engineering object 108A. Functions of the AI model in this invention include generating detailed textual descriptions of engineering objects 108A-N, creating graphical representations based on the textual descriptions, and identifying and highlighting differences between different versions of engineering objects 108A-N.

Various types of generative AI systems that may be used include Transformer-based models, such as GPT-3 or BERT, which excel in understanding and generating human-like text. Recurrent Neural Networks (RNNs), particularly Long Short-Term Memory (LSTM) networks, are also effective for sequential data processing, making them suitable for generating natural language descriptions. Variational Autoencoders (VAEs) and Generative Adversarial Networks (GANs) can be employed for creating detailed graphical representations, leveraging their ability to generate high-quality images based on textual inputs.

Technologies that may be used to implement these AI models involve deep learning frameworks such as TensorFlow and PyTorch, which provide the necessary tools and libraries to build, train, and deploy complex neural networks. TensorFlow offers a comprehensive ecosystem for deploying machine learning models across various platforms, including servers, edge devices, and mobile applications. PyTorch, known for its dynamic computational graph and ease of use, facilitates rapid prototyping and experimentation with AI models. Additionally, cloud platforms like Google Cloud Al, AWS SageMaker, and Microsoft Azure AI offer scalable infrastructure and pre-trained models to accelerate the development and deployment of generative AI systems.

Training data needed to train the AI models includes extensive datasets containing examples of engineering objects 108A-N, their attributes, and corresponding natural language descriptions. For instance, training data for a Transformer-based model would comprise pairs of technical descriptions and their natural language equivalents, covering a wide range of engineering object types such as blocks, HMI screens, Tag tables, and UDTs. This diverse dataset ensures that the AI model learns to handle various engineering contexts and accurately generate relevant descriptions.

The dimensions of datatypes used to train the AI models are crucial for their effectiveness. Textual data for training natural language processing models include sequences of words or tokens, often represented as vectors in high-dimensional spaces using techniques like Word2Vec or embeddings from pre-trained models like BERT. Graphical data for training models like VAEs or GANs include pixel values of images, represented as multi-dimensional arrays or tensors. For example, an HMI screen layout might be represented as a 3-dimensional tensor, with dimensions corresponding to height, width, and color channels (RGB).

By utilizing these advanced generative AI systems, deep learning technologies, comprehensive training datasets, and appropriate data dimensions, the automation module 112 effectively generates accurate and coherent natural language descriptions and graphical representations of engineering objects 108A-N. This approach ensures a robust and reliable comparison process, facilitating better understanding and analysis of engineering object modifications.

A training process of the AI model involves several steps to ensure the AI model understands intricacies of different engineering object types and attributes. First, the AI model is provided with a large dataset containing various examples of engineering objects 108A-N, such as blocks, HMI screens, Tag tables, and User-Defined Types (UDTs). Each example in the dataset includes detailed information about a plurality of components of the engineering object 108A, a plurality of attributes of the engineering object 108A, and relationships between the plurality of components and the plurality of attributes, along with corresponding natural language descriptions and graphical representations. The dataset is curated to cover a wide range of scenarios and variations, ensuring the AI model learns to handle different engineering object types and programming languages. The training process utilizes supervised learning, where the AI model is trained to map input data (engineering object details) to desired output (natural language descriptions and graphical representations). The processor 202 employs machine learning algorithms, such as neural networks, to train the AI model with patterns and relationships within the dataset. During training, the AI model iteratively adjusts internal parameters to minimize the error between predictions and actual outputs in the dataset. For example, when training the AI model with blocks programmed in Ladder Logic (LAD), the processor 202 provides numerous examples of blocks with detailed information about their rungs, instructions, and interconnections. The AI model learns to identify a logical structure of Ladder Logic and generate accurate descriptions, such as "The block includes three rungs: the first rung activates a motor when a switch is turned on, the second rung starts a timer, and the third rung triggers an alarm if the timer exceeds a set duration." The AI model also learns to create corresponding graphical representations that visually depict the Ladder Logic structure. The training process also involves validation and testing phases, where the AI model's performance is evaluated on separate datasets not used during training. The processor 202 assesses the AI model's accuracy, precision, and recall in generating natural language descriptions and graphical representations. Feedback from evaluations is used to fine-tune the AI model, further improving its performance.

For example, for the first version of the block, the artificial intelligence model is configured to generate a description such as, "The initial version of the block includes three rungs. The first rung activates a motor when a switch is turned on, the second rung starts a timer, and the third rung triggers an alarm if the timer exceeds a set duration." For the second version, if modifications were made, the artificial intelligence model is configured to generate a description like, "The updated version of the block adds a fourth rung that deactivates the motor if the temperature sensor detects overheating. Additionally, the second rung's timer duration is increased from 5 seconds to 10 seconds."

In the case of an HMI screen, the processor 202 is configured to extract data items such as the positions, sizes, colors, and behaviors of UI elements from both versions. The artificial intelligence model then creates natural language descriptions such as, "The initial version of the HMI screen includes a start button located at the top-left corner, a red indicator light in the center, and a text field displaying 'System Ready' at the bottom." For the second version, the artificial intelligence model generates a description like, "The updated version of the HMI screen adds a stop button next to the start button, changes the indicator light to green, and updates the text field to display 'System Running' instead of 'System Ready'."

The automation module 112 is further configured to cause the processor 202 to organize the natural language descriptions into at least a first prompt that captures relationships between a plurality of components and attributes of the engineering object 108A. A prompt, in the context of a generative AI system, serves as a structured input that guides the AI in generating relevant and accurate responses. The prompt includes specific information and context that the AI uses to produce detailed and coherent descriptions or analyses.

The processor 202 is configured to select the first prompt from a plurality of prompts based on the extracted plurality of data items by analyzing the engineering object type and the nature of the extracted plurality of data items. For example, when the processor 202 encounters a block programmed in Ladder Logic (LAD), it is configured to identify the relevant data items such as rungs, instructions, and their interconnections. The processor 202 then selects a prompt that is specifically designed to handle a logical structure and a sequence of operations in a Ladder Logic block. The first prompt is structured to include sections for each rung, detailing instructions and relationships. To illustrate, for a block with three rungs, the processor 202 is configured to organize the natural language descriptions into the first prompt as follows: "Describe the first rung, which activates a motor when a switch is turned on. Detail the second rung, which starts a timer. Outline the third rung, which triggers an alarm if the timer exceeds a set duration." By organizing the natural language descriptions into the first prompt, the processor 202 ensures that the artificial intelligence model captures the relationships and sequences between the different components of the block.

The automation module 112 is further configured to cause the processor 202 to transmit at least the first prompt to the artificial intelligence (Al) model to prompt the AI model. The AI model, implemented using advanced machine learning algorithms and neural networks, processes the first prompt to generate a comprehensive natural language description of the HMI screen. For instance, the AI model might generate a description such as, "The initial version of the HMI screen includes a start button located at the top-left corner, a red indicator light in the center, and a text field displaying 'System Ready' at the bottom." The AI model then processes the second prompt, which includes changes made in the second version, and generates a description such as, "The updated version of the HMI screen adds a stop button next to the start button, changes the indicator light to green, and updates the text field to display 'System Running'."

The processor 202 is configured to transmit the first prompt to the artificial intelligence model using a communication interface, such as an API (Application Programming Interface) call. The API serves as the technical component that facilitates the transmission of the prompt from the processor 202 to the AI model. The API ensures that the prompt is delivered in a structured format that the AI model can understand and process effectively.

In other words, the automation module 112 is further configured to cause the processor 202 to prompt the AI model to generate a first and a second textual descriptive model for an engineering object 108A based on the first version and the second version of the engineering object 108A respectively. The first and the second textual descriptive model are natural language descriptions of the engineering object 108A. The first and the second textual descriptive models provide a coherent and detailed account of the engineering object's state, covering aspects like the layout, structure, and functionality. For example, a textual descriptive model for a block might describe the sequence of rungs, the specific instructions within each rung, and the interconnections between different parts of the block. Similarly, a textual descriptive model for an HMI screen would detail the positions, sizes, colors, and behaviors of UI elements.

The textual descriptive models serve as a high-level abstraction that translates the technical details of the engineering objects into understandable language. This structured approach ensures that the textual descriptive models are comprehensive, capturing all relevant details necessary for accurate comparison and analysis. The automation module 112 ensures consistency and clarity in the generated descriptions, facilitating better understanding and communication of changes between different versions of the engineering object 108A.

The first textual descriptive model represents an initial state of the engineering object 108A, capturing a plurality of attributes of the engineering object 108A in the first version. The second textual descriptive model represents an updated state of the same engineering object 108A, reflecting changes, modifications, or enhancements made in the second version. In one example, the first and second textual descriptive models comprise textual descriptions of structured representations of respective versions of the engineering object 108A, including information about object properties, hierarchical relationships, and functional characteristics of the engineering object 108A.

For example, consider an HMI screen used in an automation system. The first version of the HMI screen comprises one or more user interface (UI) elements such as a start button, an indicator light, and a text field. The processor 202 is configured to extract data items such as a position, a size, a color, and a behavior of the UI elements from the first version. The processor 202 then prompts the AI model to generate the first textual descriptive model, which could read, "The initial version of the HMI screen includes a start button located at the top-left corner, a red indicator light in the center, and a text field displaying 'System Ready' at the bottom." In the second version of the HMI screen, additional elements may be introduced or existing elements may be modified to improve functionality. The processor 202 is configured to extract updated data items from the second version, capturing new and modified attributes. The processor 202 then prompts the AI model to generate the second textual descriptive model, which describes, "The updated version of the HMI screen adds a stop button next to the start button, changes the indicator light to green, and updates the text field to display 'System Running' instead of 'System Ready'."

The automation module 112 is further configured to cause the processor 202 to compare the first and the second textual descriptive models to generate a textual difference model that comprises a plurality of textual differences between the first and the second textual descriptive models. The textual difference model is manifested as a structured software object within the system. The processor 202 represents the textual difference model as a class or data structure, typically implemented in a programming language such as Python, Java, or C++.

The software object for the textual difference model contains attributes and methods that encapsulate the details of the identified differences. The class definition includes properties to store information such as the type of modification (addition, deletion, or alteration), the specific attributes affected, the context of the change within the engineering object 108A, and any relevant metadata. For example, the class have attributes like modificationType, affected Attributes, context, and timestamp.

The processor 202 instantiates the textual difference model object by creating instances of the class for each identified difference. Each instance of the textual difference model object represents a specific discrepancy between the first and the second textual descriptive models. The processor 202 populates the attributes of each instance with the relevant data extracted from the comparison process. For example, an instance of the textual difference model object might have its modificationType attribute set to "addition," its affectedAttributes attribute set to "stop button," and its context attribute describing the position next to the start button.

One advantage of comparing the first and the second textual descriptive models rather than comparing the first version and the second version of the engineering object 108A themselves is the increased clarity and comprehensibility of the differences.

When the processor 202 compares the first and the second textual descriptive models, the comparison focuses on structured and coherent representations of the engineering object 108A. The first and the second textual descriptive models translate technical details and attributes of the engineering object 108A into natural language descriptions that are easier to understand and analyze. For example, the first textual descriptive model might describe the initial state of an HMI screen, including the positions and properties of buttons and indicators. The second textual descriptive model would describe the updated state, highlighting any changes made by the user.

By generating the textual difference model the first and the second textual descriptive models, the processor 202 can clearly outline specific modifications, additions, or deletions between the first version and the second version. This approach simplifies identification of changes, as the textual differences are presented in a human-readable format. Engineers can quickly grasp the nature and extent of the modifications without sifting through complex code or graphical representations.

Comparing the first and the second versions of the engineering object 108A directly can be cumbersome and prone to misinterpretation. The raw data and technical intricacies involved in the engineering object 108A obscures the functional changes, making it difficult to understand the impact of modifications. Textual descriptive models, on the other hand, provide a higher-level abstraction that distills essential information into comprehensible language.

The processor 202 utilizes one or more algorithms such as diff algorithms and natural language processing techniques to perform comparison. Diff algorithms, widely used in text comparison, identify changes between two versions of a document by highlighting additions, deletions, and modifications. Natural language processing techniques further enhance this process by understanding the context and semantic meaning of the text, ensuring a more accurate comparison. For example, consider an HMI screen with a first version and a second version. The first textual descriptive model might describe, "The initial version of the HMI screen includes a start button located at the top-left corner, a red indicator light in the center, and a text field displaying 'System Ready' at the bottom." The second textual descriptive model might describe, "The updated version of the HMI screen adds a stop button next to the start button, changes the indicator light to green, and updates the text field to display 'System Running' instead of 'System Ready'." In one example, the processor 202 is configured to compare the first and the second textual descriptive models using the diff algorithm. The diff algorithm identifies a plurality of differences between two descriptions by detecting changes in the text. The textual difference model is then generated, capturing changes in a structured format. In one example, the textual difference model includes the following textual differences: "addition of a stop button next to the start button," "change of the indicator light color from red to green," and "update of the text field content from 'System Ready' to 'System Running'." Textual differences refer to specific changes identified between the first and the second textual descriptive models. The textual differences highlight what has been added, removed, or modified in the engineering object 108A between the first version and the second version. By generating a textual difference model, the processor 202 provides a clear and detailed account of all changes, enabling automation engineers to understand modifications to the engineering object 108A and implications of the modifications.

The automation module 112 is further configured to cause the processor 202 to identify one or more visual elements associated with the engineering object type. For example, when dealing with an HMI screen, the processor 202 is configured to identify visual elements such as buttons, indicators, text fields, and graphical icons. Each of the visual elements is associated with specific attributes, such as position, size, color, and behavior. The automation module 112 is further configured to cause the processor 202 to extract layout information and component relationships from the first and second textual descriptive models. The processor 202 is configured to analyze the textual descriptions to determine how the visual elements are arranged and how they interact with each other. For instance, the first textual descriptive model might describe a start button located at the top-left corner, an indicator light in the center, and a text field at the bottom. The second textual descriptive model describes an additional stop button next to the start button, a change in the indicator light's color, and an updated text field message. The processor 202 is configured to extract layout information and identify the relationships between components, such as spatial arrangement and sequence of interactions.

The automation module 112 is further configured to cause the processor 202 to generate visual element placement instructions based on the extracted layout information and the extracted component relationships. The processor 202 is configured to use the extracted details to create instructions that specify where and how each visual element should be placed within a graphical representation of the engineering object 108A. For example, the processor 202 is configured to generate instructions to place the start button at the top-left corner, the stop button next to the start button, the indicator light in the center with a specified color, and the text field at the bottom with the updated message. The visual element placement instructions ensure that the graphical representation accurately reflects the layout and interactions described in the textual models. The automation module 112 is further configured to cause the processor 202 to transmit the visual element placement instructions and engineering object type to the AI model. The processor 202 is configured to send the detailed instructions and the identified engineering object type to the AI model using a communication interface, such as an API call. Thus, the AI model receives all necessary information to generate an accurate graphical representation of the engineering object 108A. The AI model uses the placement instructions to render the visual elements in the correct positions and with the appropriate attributes, resulting in a precise and coherent graphical depiction of the engineering object 108A.

The automation module 112 is further configured to cause the processor 202 to prompt the AI model to generate a first graphical representation and a second graphical representation of the engineering object 108A. The first graphical representation is generated by the AI model based on the first textual descriptive model and the second graphical representation is generated by the AI model based on the second textual descriptive model. The first and the second graphical representations comprise visual depictions of at least one of a structure, layout, or a functionality of a respective version of the engineering object 108A. For example, consider an HMI screen used in an automation system. The first textual descriptive model describes the initial version of the HMI screen, including details such as, "The initial version of the HMI screen includes a start button located at the top-left corner, a red indicator light in the center, and a text field displaying 'System Ready' at the bottom." The second textual descriptive model describes the updated version, stating, "The updated version of the HMI screen adds a stop button next to the start button, changes the indicator light to green, and updates the text field to display 'System Running'."

The AI model is trained to generate graphical representations using a combination of supervised learning and computer vision techniques. During a training process, the AI model is provided with a dataset containing pairs of textual descriptions and corresponding graphical representations of various engineering objects 108A-N. The dataset includes different versions of the objects, ensuring that the AI model learns to handle changes in structure, layout, and functionality. The AI model uses information to understand how textual descriptions map to visual elements and placements.

The automation module 112 is further configured to cause the processor 202 to prompt the AI model to generate the first graphical representation based on the first textual descriptive model. The AI model processes textual information, and identifies visual elements such as a start button, a red indicator light, and a text field. The AI model then applies the visual element placement instructions to render the identified visual elements in user-defined positions, creating a visual depiction of the initial version of the HMI screen.

Similarly, the automation module 112 is further configured to cause the processor 202 to prompt the AI model to generate the second graphical representation based on the second textual descriptive model. The AI model identifies modified visual elements such as an additional stop button, a change in the indicator light's color to green, and an updated text field message. The AI model uses the visual element placement instructions to accurately place the modified visual elements, resulting in a graphical depiction of the updated version of the HMI screen.

The automation module 112 is further configured to cause the processor 202 to receive the first and second graphical representations from the AI model. The first and the second graphical representations visually depict a structure and relationships of a plurality of components within the respective versions of the engineering object 108A. The first graphical representation, generated based on the first textual descriptive model, illustrates an initial configuration and a layout of a plurality of components of the engineering object 108A. For example, in the case of an HMI screen, the first graphical representation might show a start button positioned at the top-left corner, a red indicator light in the center, and a text field at the bottom displaying the message "System Ready." The second graphical representation, generated based on the second textual descriptive model, would illustrate the updated configuration, such as the addition of a stop button next to the start button, the change of the indicator light's color to green, and the updated text field message displaying "System Running." The automation module 112 is further configured to cause the processor 202 to transmit the first graphical representation, the second graphical representation, and the textual difference model to the AI model.

The automation module 112 is further configured to cause the processor 202 to instruct the AI model to visually highlight differences between the first and second graphical representations based on the textual difference model. For example, when dealing with an HMI screen, the first graphical representation might show a start button, a red indicator light, and a text field displaying "System Ready." The second graphical representation, however, include an additional stop button, a green indicator light, and a text field updated to display "System Running." To visually highlight differences, the processor 202 is configured to first analyze the textual difference model, which outlines specific changes between the first and second textual descriptive models. The AI model then receives instructions from the processor 202 to use visual indicators, such as color coding or annotations, to emphasize the changes. For instance, the AI model highlights the newly added stop button with a blue border to indicate an addition. The change in the indicator light from red to green could be marked with an overlay arrow pointing to the new color, while the updated text field message might be underlined to draw attention to the modification.

The automation module 112 is further configured to cause the processor 202 to specify visual indicators to represent different types of changes, such as additions, deletions, or modifications. The automation module 112 is further configured to cause the processor 202 to prompt the AI model to generate a graphical compare representation visualizing a plurality of differences between the first version and the second version of the engineering object 108A. The graphical compare representation is generated by the AI model based on the first graphical representation, the second graphical representation, and the textual difference model. The graphical compare representation is a visual summary that highlights the differences between two versions of an engineering object, such as a PLC program or an HMI screen. The graphical compare representation uses visual elements like color coding, annotations, and overlays to clearly indicate modifications, additions, or deletions, making the changes immediately apparent and easy to understand.

An exemplary embodiment of the graphical compare representation consists of three parts: a user interface component, a rendering engine, and the AI model. The user interface component, developed using React framework, allows users to interact with the graphical compare representation in a dynamic and responsive manner. The rendering engine, implemented using the D3.js library, generates detailed and scalable vector graphics to accurately depict the engineering objects and their differences. The AI model, developed and trained using TensorFlow, integrates inputs from the graphical representations and the textual difference model to generate an accurate graphical compare representation, leveraging machine learning techniques to ensure precision and consistency. By combining these three parts, the embodiment provides a comprehensive and easily interpretable visual summary, enhancing the overall user experience and efficiency in comparing engineering objects.

The graphical compare representation generated using the first graphical representation, the second graphical representation, and the textual difference model is better than one created by simply comparing the first version and the second version for several reasons. First, utilizing the first graphical representation and the second graphical representation ensures that the AI model translates complex technical details into coherent and intuitive visual depictions. When the AI model creates the first graphical representation and the second graphical representation based on the respective textual descriptive models, the AI model effectively captures the layout, structure, and functionality of the engineering object in each version. This approach provides a clear and concise visual context that is often lost when directly comparing raw data or technical details of the first version and the second version.

Second, the textual difference model adds a layer of clarity and specificity by highlighting the exact modifications, additions, or deletions between the versions. The textual difference model, generated by comparing the first textual descriptive model and the second textual descriptive model, organizes changes in a structured and human-readable format. This structured approach ensures that the AI model accurately identifies and emphasizes the differences, making them more understandable and less prone to misinterpretation.

The graphical compare representation is a visual summary that highlights the plurality of differences between two versions of the engineering object 108A. For example, when comparing two versions of an HMI screen, the first graphical representation might show the initial layout with a start button, a red indicator light, and a text field displaying "System Ready." The second graphical representation might show an updated layout with an additional stop button, a green indicator light, and a text field displaying "System Running." The graphical compare representation is generated in real-time with the modification of the engineering object 108A. Real-time generation of graphical compare representations offers several advantages. Engineers can instantly visualize the impact of their changes, enabling them to quickly identify and correct errors. This immediate feedback loop enhances productivity and reduces the risk of introducing faults into the system. Additionally, real-time updates facilitate more effective collaboration among team members, as all participants can see the current state of the engineering object 108A simultaneously.

The real-time capability is achieved through the seamless integration of the automation module 112, the processor 202, and the AI model. The processor 202 employs high-speed data processing techniques to capture and interpret user modifications instantaneously. The automation module 112 utilizes efficient algorithms to update the textual descriptive models and generate prompts for the AI model. The AI model, trained on vast datasets, quickly generates accurate graphical representations that reflect the latest changes. The engineering system 102 employs optimized communication protocols to ensure that updates are transmitted to the user interface 122A without delay. A synergy of technical components enables the engineering system 102 to deliver real-time graphical compare representations, significantly enhancing the user experience and operational efficiency.

To create the graphical compare representation, the AI model creates a composite visual that incorporates a plurality of elements from the first version and the second version, using visual indicators such as color coding, arrows, or annotations to highlight the differences. For instance, the AI model might use a blue border around the newly added stop button to indicate an addition. The change in the indicator light from red to green could be marked with an overlay arrow pointing to the new color, and the updated text field message might be underlined to draw attention to the modification.

The automation module 112 is further configured to cause the processor 202 to display the generated graphical compare representation on the user interface 122A to visually represent the user modification to a user in real-time, without introducing perceptible latency after the user modifications are made. Perceptible delay refers to any noticeable lag between the user's input and a system's response, typically measured in milliseconds. In contrast, real-time updates ensure that the graphical compare representation is immediately updated as the user modifies the engineering object 108A. For example, consider an engineer working on a ladder logic diagram for a PLC program. The engineer accesses the engineering object 108A through a user interface on a client device, such as a desktop computer. As the engineer adds new rungs or modifies existing logic, the processor 202 detects changes instantly. The automation module 112 processes the modifications and prompts the AI model 510 to generate updated graphical representations in real-time.

Displaying the graphical compare representation without perceptible latency provides several advantages. For example, engineers can see the immediate effects of their changes, allowing them to quickly identify and correct any errors. The immediate feedback loop improves accuracy and reduces the risk of introducing faults into the system. The real-time updates enhance productivity by eliminating waiting times, enabling engineers to work more efficiently. Real-time visualization supports better collaboration among team members, as everyone can view the most current state of the engineering object 108A simultaneously.

The automation module 112 is further configured to cause the processor 202 to generate a change summary report based on the graphical compare representation. The change summary report includes a list of differences between the first version and the second version of the engineering object 108A. The change summary report is a detailed document that enumerates modifications made between two versions of the engineering object 108A, providing a comprehensive overview of the changes. The processor 202 employs technical components such as natural language processing algorithms and diff algorithms to create the change summary report. The natural language processing algorithms help in translating the visual differences into coherent textual descriptions, while the diff algorithms identify and list the specific changes between the two versions.

The automation module 112 is further configured to cause the processor 202 to associate the change summary report with the graphical compare representation. For example, when an HMI screen undergoes changes such as adding a stop button, changing the indicator light color from red to green, and updating the text field message from "System Ready" to "System Running," the processor 202 is configured to generate the change summary report based on the undergone changes. The processor 202 is configured to then link this report to the graphical compare representation, ensuring that users can easily access a detailed summary of changes alongside the visual comparison.

The automation module 112 is further configured to cause the processor 202 to provide access to the change summary report through the user interface. The user interface includes an option for users to view the change summary report. When users interact with the graphical compare representation, a button or link labeled "View Change Summary Report" appears. Upon clicking this button, the user interface displays the report, which details each change made to the engineering object 108A, such as the addition of the stop button, the color change of the indicator light, and the text field update.

The automation module 112 is further configured to cause the processor 202 to enable user interaction with the graphical compare representation through the user interface. Users can interact with the graphical compare representation by clicking on different components or highlighted changes. For instance, users might click on the highlighted stop button to see more details about its addition. The user interface employs interactive elements such as clickable areas and tooltips to facilitate this interaction.

The automation module 112 is further configured to cause the processor 202 to receive user selection of a specific difference highlighted in the graphical compare representation. When a user clicks on a highlighted change, such as the stop button, the processor 202 is configured to detect this selection and register the specific difference the user is interested in. The processor 202 uses event-handling mechanisms to capture and process user interactions.

The automation module 112 is further configured to cause the processor 202 to retrieve detailed information about the selected difference from the textual difference model. After detecting the user's selection, the processor 202 is configured to access the textual difference model to gather more information about the chosen change. For example, if the user selects the stop button, the processor 202 is configured to retrieve details about when and why the stop button was added, along with any related control logic updates.

The automation module 112 is further configured to cause the processor 202 to display detailed information in a pop-up window or side panel within the user interface. The processor 202 presents the retrieved information in a user-friendly format, such as a pop-up window or a side panel. For instance, when the user selects the stop button, a pop-up window might appear, displaying information like, "Stop button added to improve safety. Integrated with start button control logic to halt operations when necessary." The user interface is designed to ensure that the detailed information is easily readable and accessible.

The automation module 112 is further configured to cause the processor 202 to generate a version history timeline based on multiple versions of the engineering object 108A. A version history timeline is a chronological representation that displays the sequence of changes and updates made to an engineering object 108A over time. For example, for an HMI screen, the version history timeline might show the initial version with a start button, a red indicator light, and a text field displaying "System Ready." Subsequent entries in the timeline could include the addition of a stop button, a change in the indicator light color to green, and an update in the text field to display "System Running."

The automation module 112 is further configured to cause the processor 202 to integrate the version history timeline with the graphical compare representation. The processor 202 is configured to ensure that the version history timeline is connected to the graphical compare representation, allowing users to see both the visual and chronological context of the changes. Integration involves linking each entry in the version history timeline to the corresponding graphical representation of that version.

The automation module 112 is further configured to cause the processor 202 to enable navigation between different versions of the engineering object 108A through interaction with the version history timeline in the user interface. The processor 202 is configured to facilitate navigation by allowing users to select any point on the version history timeline. For example, if an automation engineer clicks on the entry corresponding to the initial version of the HMI screen, the user interface will display the first graphical representation showing the start button, the red indicator light, and the text field with "System Ready." If the engineer then clicks on the entry for the updated version, the user interface will switch to display the second graphical representation with the stop button, the green indicator light, and the updated text field showing "System Running."

The automation module 112 is further configured to cause the processor 202 to analyze the first and second textual descriptive models and the graphical compare representation to detect errors in the engineering object 108A. For example, if the engineering object 108A is an HMI screen, the first textual descriptive model might describe a start button, a red indicator light, and a text field displaying "System Ready," while the second textual descriptive model might describe an added stop button, a green indicator light, and a text field displaying "System Running." The processor 202 is configured to use one or more algorithms to compare the two textual descriptive models and the graphical compare representation, to identify any discrepancies or potential issues, such as a mismatch in an expected behavior of a button or an incorrect color change in the indicator light.

The error in a context of the engineering object 108A refers to any discrepancy, inconsistency, or unintended deviation from an intended design or functionality of the engineering object 108A. Errors can manifest as logical faults, such as incorrect control logic in a PLC program, or as visual inconsistencies, such as misaligned elements on an HMI screen. Errors include incorrect parameter values, missing components, or unintended changes that affect the overall performance or safety of the system. In the case of the HMI screen example, an error might involve a button that does not perform its intended action when pressed or an indicator light that displays the wrong color based on the system's state. By identifying errors, the system ensures that the engineering object adheres to its specifications and functions as intended, thereby preventing potential issues in the production environment.

The automation module 112 is further configured to cause the processor 202 to generate suggestions for correcting the detected errors. Once the processor 202 identifies potential issues, it is configured to generate suggestions to resolve them. For instance, if the comparison reveals that the stop button's functionality is not properly integrated with the start button, the processor 202 might suggest adjusting the control logic to ensure the stop button correctly stops the process initiated by the start button. The processor 202 uses one or more rule-based systems and machine learning algorithms to formulate the suggestions, drawing on a database of best practices and previous fixes for similar issues.

To technically implement the generation of suggestions for correcting the detected errors, the processor 202 employs a combination of rule-based systems and machine learning algorithms. The rule-based systems consist of a set of predefined rules and logic that specify common error patterns and corresponding corrective actions. These rules are crafted based on industry standards, engineering principles, and historical data from previous projects. For example, a rule might state that if a button's action is not linked to its intended control logic, the system should suggest establishing the appropriate connections within the control logic.

The processor 202 also utilizes machine learning algorithms trained on a large dataset of engineering objects, modifications, and corrections. This dataset includes examples of various types of engineering objects, the errors that occurred during their development, and the successful strategies used to correct those errors. The machine learning algorithms analyze this data to identify patterns and infer the most effective corrective actions for newly detected errors.

In one example, when the processor 202 identifies an error, the processor 202 first consults the rule-based system to check if the error matches any predefined patterns. If a match is found, the processor 202 retrieves the corresponding corrective action from the rule set. If the error does not match any predefined rules, the processor 202 then leverages the machine learning algorithms to analyze the error in the context of the available dataset. The algorithms predict the most likely corrective action based on similar past instances and their resolutions.

The automation module 112 is further configured to cause the processor 202 to display the suggestions to the user through a user interface. The processor 202 presents the generated suggestions to the automation engineer via the user interface. The user interface might show a list of detected issues alongside recommended fixes. For example, the user interface might display a message indicating, "The stop button is not correctly linked to the start button's control logic. Suggested fix: Update the control logic to include stop button functionality." The user interface uses visual elements such as pop-up windows or side panels to ensure the suggestions are easily accessible and understandable.

The automation module 112 is further configured to cause the processor 202 to update the graphical compare representation based on user-selected corrections from the suggestions. After the automation engineer reviews the suggestions and selects the appropriate corrections, the processor 202 is configured to update the graphical compare representation to reflect the changes. For instance, if the engineer accepts the suggestion to update the control logic, the processor 202 modifies the graphical compare representation to show the corrected interaction between the start and stop buttons. The processor 202 uses real-time rendering techniques to update the graphical representation, ensuring that the visual depiction is always current and accurate.

The automation module 112 offers significant advantages by leveraging the first graphical representation, the second graphical representation, and the textual difference model to generate the graphical compare representation, rather than simply comparing the first version and the second version directly. The automation module 112 ensures that complex technical details are translated into coherent and intuitive visual depictions, capturing the layout, structure, and functionality of engineering objects in each version. The textual difference model provides a structured and human-readable format that highlights exact modifications, additions, or deletions, thereby reducing the likelihood of misinterpretation and errors. By combining elements, the AI model creates a comprehensive and accurate graphical compare representation that visually highlights differences with color coding, annotations, or overlays, making changes immediately apparent and understandable.

For automation engineers, the automation module 112 streamlines a process of identifying and understanding changes between different versions of engineering objects 108A-N, significantly reducing the time and effort required for manual comparison. The use of generative AI further enhances the efficiency and accuracy of the process by automatically generating detailed textual descriptive models and corresponding graphical representations, ensuring consistency and eliminating human errors. The real-time aspect of the automation module 112 provides immediate feedback on modifications, allowing engineers to see the effects of their changes instantaneously. This immediate feedback loop improves productivity, enables quicker error detection and correction, and supports more effective collaboration among team members by ensuring that everyone has access to the most current state of the engineering object.

FIG 3 is a block diagram of an automation module 112, such as those shown in FIG 2, in which an embodiment of the present invention can be implemented. In FIG 3, the automation module 112 comprises a request handler module 302, a prompt generator module 304, an analysis module 306, a natural language processing module 308, an engineering object database 310, a validation module 312 and a deployment module 314. FIG. 3 is explained in conjunction with FIG. 1 and FIG. 2.

The request handler module 302 is a component of the automation module 112, designed to manage and process incoming requests from various client devices 120A-N. The request handler module 302 module acts as a first point of interaction between a user and the engineering system 102, ensuring that all requests are accurately received, parsed, and routed to appropriate sub-modules for further processing. By efficiently handling multiple concurrent requests, the request handler module 302 ensures seamless communication and operation within the industrial environment 100, facilitating the automation and comparison of the plurality of engineering objects 108A-N.

The prompt generator module 304 within the automation module 112 is responsible for creating structured prompts that guide the AI model in generating natural language descriptions and graphical representations of engineering objects 108A-N. The prompt generator module 304 analyzes a plurality of extracted data items and a plurality of textual descriptive models to formulate detailed prompts that capture the relationships and attributes of the engineering objects 108A. By providing the AI model with precise and context-rich prompts, the prompt generator module 304 enhances the accuracy and relevance of the generated outputs, supporting effective comparison and documentation processes.

The analysis module 306 is configured to perform analyses of the plurality of engineering objects 108A-N. The analysis module 306 leverages one or more algorithms and machine learning techniques to compare different versions of the plurality of engineering objects 108AN, identify potential errors or inconsistencies, and generate suggestions for corrections. The analysis module 306 ensures that the plurality of engineering objects 108A-N are accurately parsed and compared, providing valuable insights and enabling engineers to make informed decisions about modifications and updates.

The natural language processing module 308 in the automation module 112 is tasked with converting technical details and attributes of engineering objects 108A-N into coherent and understandable natural language descriptions. The natural language processing module 308 interprets, analyzes, and generates detailed textual descriptions that facilitate clear communication and documentation of the engineering project 106. The natural language processing module 308 enhances usability and accessibility of complex engineering data, making it easier for engineers and stakeholders to understand and work with.

The engineering object database 310 is an integral component of the automation module 112, serving as a centralized repository for storing comprehensive information related to the plurality of engineering objects 108A-N. The engineering object database 310 houses configuration files, parameter values, test results, simulation data, and other essential attributes and structures of the plurality of engineering objects 108A-N. By maintaining a well-organized and accessible database, the engineering object database 310 supports efficient data retrieval and management, ensuring that the automation module 112 can effectively process and compare the plurality of engineering objects 108A-N.

The validation module 312 within the automation module 112 is designed to ensure accuracy and integrity of the plurality of engineering objects 108A-N and corresponding data. The validation module 312 performs checks and validations on a plurality of extracted data items, generated descriptions, and graphical representations to detect and correct any discrepancies or errors. The validation module 312 plays a crucial role in maintaining a reliability and a quality of the automation processes, providing engineers with confidence in the outputs produced by the automation module 112.

The deployment module 314 is responsible for deploying generated outputs, including natural language descriptions, graphical representations, and change summary reports, to the relevant client devices 120A-N and user interfaces. The deployment module 314 ensures that all processed data and insights are effectively communicated and accessible to users, facilitating seamless interaction and collaboration within the industrial environment 100. The deployment module 314 supports efficient distribution and utilization of outputs of the automation module 112, enhancing the overall productivity and effectiveness of the engineering project 106.

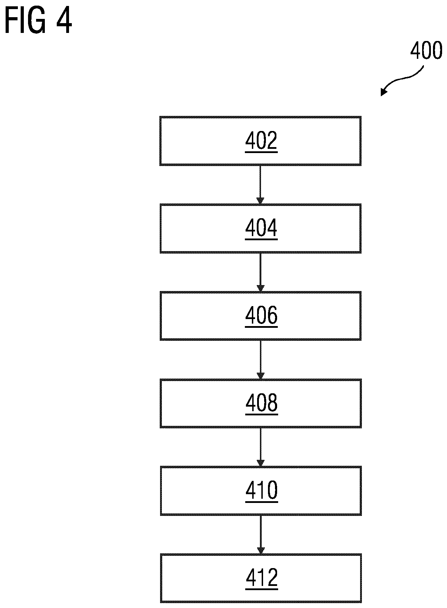

FIG 4 is a process flowchart illustrating an exemplary method of a generative Al-based graphical comparison of engineering objects, according to an embodiment of the present invention. FIG. 4 is explained in conjunction with FIG. 1, 2, and 3.

At step 402, an engineering object type is identified.

At step 404, an AI model is prompted to generate a first and a second textual descriptive models for the engineering object 108A, based on a first version and a second version of the engineering object 108A respectively.

At step 406, the first and the second textual descriptive models are compared to generate a textual difference model that comprises a plurality of textual differences between the first and the second textual descriptive model.

At step 408, the AI model is prompted to generate a first graphical representation and a second graphical representation of the engineering object 106. The first and the second graphical representation is generated by the AI model using the first and the second textual descriptive model respectively.

At step 410, the AI model is prompted to generate a graphical compare representation visualizing a plurality of differences between the first version and the second version of the engineering object 106. The graphical compare representation is generated by the AI model based on the first graphical representation, the second graphical representation, and the textual difference model.

At step 412, the generated graphical compare representation is displayed on a user interface to visually represent the plurality of differences to a user.

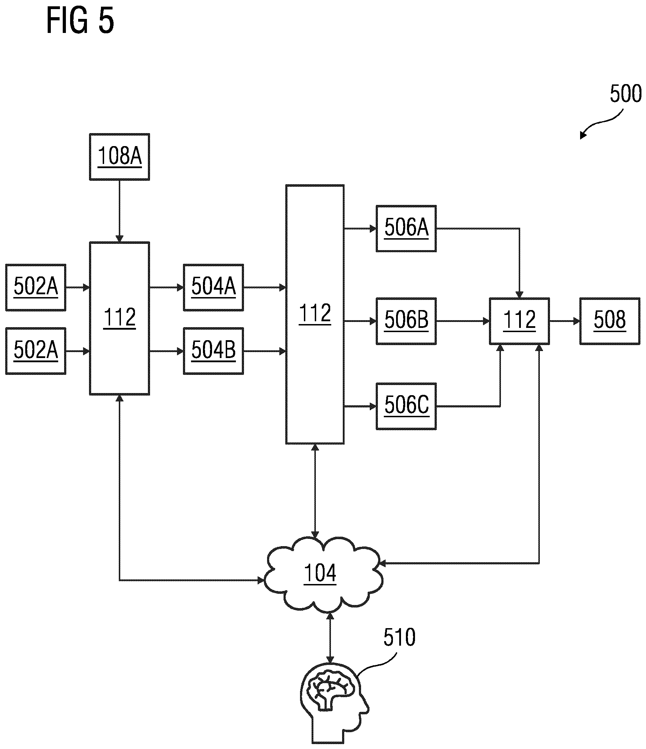

FIG. 5 is an explanatory diagram 500 illustrating a working of a method of the generative Al-based graphical comparison system for engineering objects, according to an embodiment of the present invention. The diagram 500 comprises a first version 502A and a second version 502B of the engineering object 108A.

The automation module 112 identifies the engineering object type of the engineering object 108A. By recognizing the specific type of the engineering object 108A, the automation module 112 ensures accurate processing and representation of the engineering object 108A.

The automation module 112 prompts the AI model 510 to generate a first textual descriptive model 504A for the first version 502A of the engineering object 108A. The automation module 112 also prompts the AI model 510 to generate a second textual descriptive model 504B for the second version 502B of the engineering object 108A. The first and the second textual descriptive models 504A and 504B capture the attributes and details of the respective versions of the engineering object 108A, enabling a comprehensive comparison.

The automation module 112 compares the first textual descriptive model 504A and the second textual descriptive model 504B to generate a textual difference model 506B. The textual difference model 506B comprises a plurality of textual differences between the first textual descriptive model 504A and the second textual descriptive model 504B, highlighting changes, additions, and modifications made to the engineering object 108A between the first version 502A and the second version 502B.

The automation module 112 prompts the AI model 510 to generate a first graphical representation 506A of the engineering object 108A based on the first textual descriptive model 504A. Additionally, the automation module 112 prompts the AI model 510 to generate a second graphical representation 506C of the engineering object 108A based on the second textual descriptive model 504B. The first and the second graphical representations 506A and 506C visually depict the structure, layout, and functionality of the respective versions of the engineering object 108A.

The automation module 112 further prompts the AI model 510 to generate a graphical compare representation 508, which visualizes a plurality of differences between the first version 502A and the second version 502B of the engineering object 108A. The graphical compare representation 508 is generated by the AI model 510 based on the first graphical representation 506A, the second graphical representation 506C, and the textual difference model 506B. This graphical compare representation 508 provides a clear and concise visual summary of the changes between the two versions of the engineering object 108A.

Finally, the automation module 112 displays the generated graphical compare representation 508 on a user interface 122A. By presenting the graphical compare representation 508 on the user interface 122A, the automation module 112 enables users to visually inspect and understand the plurality of differences between the first version 502A and the second version 502B of the engineering object 108A.

The present invention can take a form of a computer program product comprising program modules accessible from computer-usable or computer-readable medium storing pro-gram code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognize that numerous further modifications and combinations of various aspects are possible. Accordingly, the described aspects are intended to encompass all such alterations, modifications, and variations that fall within the scope of the appended claims.

### Bezugszeichenliste

| | |
|---|---|
| 1. | **102** - Engineering System |
| 2. | **104** - Network |
| 3. | **106** - Engineering Project |
| 4. | **108A-N** - Engineering Objects |
| 5. | **110** - Platform |
| 6. | **112** - Automation Module |
| 7. | **114** - Server |
| 8. | **116** - Network Interface |
| 9. | **118** - Database |
| 10. | **120A-N** - Client Devices |
| 11. | **122A-N** - User Interfaces |
| 12. | **202** - Processor |
| 13. | **204** - Memory |
| 14. | **206** - Storage Unit |
| 15. | **208** - Communication Interface |
| 16. | **210** - Input-Output Unit |
| 17. | **212** - Network Interface |
| 18. | **214** - Bus |
| 19. | **216** - Integrated Development Environment (IDE) |
| 20. | **302** - Request Handler Module |
| 21. | **304** - Prompt Generator Module |
| 22. | **306** - Analysis Module |
| 23. | **308** - Natural Language Processing Module |
| 24. | **310** - Engineering Object Database |
| 25. | **312** - Validation Module |
| 26. | **314** - Deployment Module |
| 27. | **502A** - First Version of Engineering Object |
| 28. | **502B** - Second Version of Engineering Object |
| 29. | **504A** - First Textual Descriptive Model |
| 30. | **504B** - Second Textual Descriptive Model |
| 31. | **506A** - First Graphical Representation |
| 32. | **506B** - Textual Difference Model |
| 33. | **506C** - Second Graphical Representation |

## Claims

1. A computer implemented method for Al-assisted graphical comparison of engineering objects (108A-N), comprising:
detecting, by a processor (202), a user modification of an engineering object (108A), wherein during the user modification, a first version (502A) of the engineering object (108A) is modified, thereby creating a second version (502B) of the engineering object (108A);
prompting, by the processor (202), an artificial intelligence (Al) model (510) to generate a first textual descriptive model (504A) and a second textual descriptive model (504B) of the first version (502A) and the second version (502B) of the engineering object (108A) respectively;
comparing, by the processor (202), the first textual descriptive model (504A) and the second textual descriptive model (504B) to generate a textual difference model (506B) that comprises a plurality of textual differences between the first textual descriptive model (504A) and the second textual descriptive models (504B);
prompting, by the processor (202), the AI model (510) to generate a first graphical representation (506A) and a second graphical representation (506C) of the engineering object (108A), wherein the first graphical representation (506A) and the second graphical representations (506C) are generated by the AI model (510) using the first textual descriptive model (504A) and the second textual descriptive model (504B) respectively;
prompting, by the processor (202), the AI model (510) to generate a graphical compare representation (508) which visualizes a plurality of differences between the first version (502A) and the second version (502B) of the engineering object (108A), wherein the graphical compare representation (508) is generated based on the first graphical representation (506A), the textual difference model (506B), and the second graphical representation (506C); and
displaying, by the processor (202), the generated graphical compare representation (508) on a user interface (122A) to visually represent the user modification made by a user in real-time.

2. The method of claim 1, wherein the first and second textual descriptive models (504A and 504B) comprises textual descriptions of respective versions of the engineering object (108A), wherein the textual description comprises information about object properties, hierarchical relationships, and functional characteristics of the engineering object (108A).

3. The method in accordance with any of claims 1 or 2, wherein the first and second graphical representations (506A and 506C) comprise graphical depictions of at least one of a structure, layout, or a functionality of a respective version of the engineering object (108A).

4. The method in accordance with any of claims 1, 2, or 3, wherein the first version (502A) and the second version (502B) of the engineering object (108A) are received from a version control system.

5. The method in accordance with any of claims 1-4, further comprising:
analyzing, by the processor (202), the first and second textual descriptive models (504A and 504B) and the graphical compare representation (508) to detect one or more errors in the engineering object (108A);
generating, by the processor (202), one or more suggestions for correcting the detected one or more errors;
displaying, by the processor (202), the suggestions to the user through the user interface (122A); and
updating the graphical compare representation (508) based on user-selected corrections from the suggestions.

6. The method in accordance with any of claims 1-5, wherein prompting the AI model (510) to generate the first and second textual descriptive models (504A and 504B) comprises:
identifying, by the processor (202), a engineering object type of the engineering object (108A);
identifying one or more features and attributes of the engineering object (108A) based on the detected engineering object type;
extracting a plurality of data items from the first version (502A) and the second version (502B) of the engineering object (108A);
generating natural language descriptions of the extracted plurality of data items for the first and the second version (502A and 502B) of the engineering object (108A); and
encapsulating the generated natural language descriptions into at least a first prompt that captures a plurality of relationships between a plurality of components and attributes of the engineering object (108A); and
transmitting at least the first prompt to the AI model (510) to prompt the AI model (510).

7. The method in accordance with any of claims 1-6, wherein prompting the AI model (510) to generate the first graphical representation (506A) and the second graphical representation (506C) of the engineering object (108A) comprises:
identifying visual elements associated with the engineering object type;
extracting, by the processor (202), a plurality of layout information and component relationships from the first and second textual descriptive models (504A and 504B);
generating, by the processor (202), visual element placement instructions based on the extracted layout information and component relationships;
transmitting the visual element placement instructions and engineering object type to prompt the AI model (510); and
receiving the first and second graphical representations (506A and 506C) from the AI model (510), wherein the graphical representations (506A and 506C) visually depict the structure and relationships of components within the respective versions of the engineering object (108A).

8. The method in accordance with any of claims 1-7, wherein prompting the AI model (510) to generate the graphical compare representation (508) comprises:
transmitting the first graphical representation (506A), the second graphical representation (506C), and the textual difference model (506B) to the AI model (510);
prompting the AI model (510) to visually highlight differences between the first and second graphical representations (506A and 506C) based on the textual difference model (506B);
specifying one or more visual indicators to represent a plurality of types of differences between the first version (502A) and the second version (502B) of the engineering object (108A);
prompting the AI model (510) to generate explanatory annotations for each type in the plurality of types of differences; and
receiving the graphical compare representation (508) from the AI model (510), wherein the graphical compare representation (508) visualizes the plurality of differences between the first version (502A) and the second version (502B) of the engineering object (108A).

9. The method in accordance with any of claims 1-8, further comprising:
generating a change summary report based on the graphical compare representation (508), wherein the change summary report includes a list of differences between the first version (502A) and the second version (502B) of the engineering object (108A); and
providing access to a user, to the change summary report via the user interface (122A).

10. The method in accordance with any of claims 1-9, further comprising:
enabling user interaction with the graphical compare representation (508) through the user interface (122A);
receiving user selection of a specific difference highlighted in the graphical compare representation (508);
retrieving detailed information about the selected difference from the textual difference model (506B); and
displaying the detailed information in a pop-up window or side panel within the user interface (122A).

11. The method in accordance with any of claims 1-10, further comprising:
generating a version history timeline based on multiple versions of the engineering object (108A);
integrating the version history timeline with the graphical compare representation (508); and
enabling a user to navigate between different versions of the engineering object (108A) through interaction with the version history timeline in the user interface (122A).

12. An engineering system (102) for Al-assisted graphical comparison of engineering objects, wherein the engineering system (102) comprises:
one or more processor(s) (202); and
a memory (204) coupled to the one or more processor(s)(202), wherein the memory (204) comprises an automation module (112) stored in the form of machine-readable instructions executable by the one or more processor(s) (202), wherein the automation module (112) is configured to perform a method according to any of the claims 1-11.

13. An industrial environment (100) comprising:
an engineering system (102) as claimed in claim 12; and
one or more client devices (120A-N) communicatively coupled to the engineering system (102) via a network (104), wherein the engineering system (102) is configured to perform a method according to any of the claims 1 to 11.

14. A computer-program product, having machine-readable instructions stored therein, that when executed by a processor (202), cause the processors to perform a method according to any of the claims 1-11.
